# EUROPEAN PATENT SPECIFICATION

(11) **EP 3 022 879 B1**
(45) Date of publication and mention of the grant of the patent: **30.12.2020**
(21) Application number: 14841144.0
(22) Date of filing: 29.08.2014
(51) Int. Cl.: H04L 12/935, G02B 6/46, H01R 12/70, H04L 12/751, G06F 13/40, G06F 13/42, H04Q 1/02

(54) **METHOD AND APPARATUS TO MANAGE THE DIRECT INTERCONNECT SWITCH WIRING AND GROWTH IN COMPUTER NETWORKS**
VERFAHREN UND VORRICHTUNG ZUR VERWALTUNG VON DIREKTER VERBINDUNGSSCHALTERVERDRAHTUNG UND WACHSTUM IN COMPUTERNETZWERKEN
PROCÉDÉ ET APPAREIL DE GESTION DU CÂBLAGE ET DE L'EXTENSION DE COMMUTATEURS D'INTERCONNEXION DIRECTE DANS DES RÉSEAUX INFORMATIQUES

(30) Priority: 29.08.2013 US 201361871721 P
(43) Date of publication of application: 25.05.2016
(73) Proprietor: Rockport Networks Inc., Ottawa, ON K2K 3G4 (CA)
(72) Inventor: Oprea, Dan, Kanata, Ontario K2K 1W3 (CA)
(74) Representative: V.O.
(86) International application number: PCT/CA2014/000652
(87) International publication number: WO 2015/027320

(56) References cited:
- JP-A- H03 196 355
- US-A1- 2004 141 285
- US-A1- 2008 212 273
- US-A1- 2008 307 082
- James Milano ET AL: "IBM System Blue Gene Solution: Blue Gene/Q Hardware Overview and Installation Planning", , 13 May 2013 (2013-05-13), pages 1-108, XP055309252, ISBN: 978-0-7384-3822-1 Retrieved from the Internet: URL:http://www.redbooks.ibm.com/redbooks/p dfs/sg247872.pdf [retrieved on 2016-10-11]
- 'Advanced Technologies of the Supercomputer PRIMEHPCFX 10' 07 November 2011, XP055309235 Retrieved from the Internet: <URL:http://www.fujitsu.com/global/Images/p rimehpc-fx10-hard-en.pdf>
- 'IBM System Blue Gene Solution: Blue Gene /Q Hardware Overview and Installation Planning' 13 May 2013, pages 1 - 108, XP055309252 ISBN: 0738438227 Retrieved from the Internet: <URL:http://www.redbooks.ibm.com/redbooks/p dfs/sg247872.pdf>
- U. BRUENING: 'Scalable Interconnect for a booster with Knights Corner processors' THE EUROPEAN WAY TO EXASCALE: DEEP AT ISC BOF 20 June 2012, XP055323895 Retrieved from the Internet: <URL:http://www. deep-project. eu/SharedDocs/Downloads/DEEP-PROJECT/EN/Pre sentations/I SC12-BoF-Extoll.pdf.?_blob=publicationFile>
- R AMMENDOLA ET AL.: 'APEnet+: a 3D Torus network optimized for GPU-based HPC Systems' INTERNATIONAL CONFERENCE ON COMPUTING IN HIGH ENERGY AND NUCLEAR PHYSICS 2012 (CHEP2012), JOURNAL OF PHYSICS: CONFERENCE SERIES 396 2012, pages 1 - 10, XP020234856 Retrieved from the Internet: <URL:http://iopscience.iop.org/1742-6596/39 6/4/042059/pdf/1742-6596_396_4_042059.pdf>
- R AMMENDOLA ET AL.: 'APEnet+: High bandwidth 3D torus direct network for petaflops scale commodity clusters' PROCEEDING OF CHEP 2010, TAIWAN , OCTOBER 18-22, JOURNAL OF PHYSICS: CONFERENCE SERIES 331 pages 1 - 6, XP020215563 Retrieved from the Internet: <URL:http://arxiv.org/pdf/1102.3796.pdf>

## Description

### FIELD OF THE INVENTION

The present invention relates to computer network topology and architecture. In particular, the present invention relates to a method and apparatus for managing the wiring and growth of a direct interconnect switch implemented on, for example, a torus or higher radix wiring structure.

### BACKGROUND OF THE INVENTION

The term Data Centers (DC) generally refers to facilities used to house large computer systems (often contained on racks that house the equipment) and their associated components, all connected by an enormous amount of structured cabling. Cloud Data Centers (CDC) is a term used to refer to large, generally off-premise facilities that similarly store an entity's data.

Network switches are computer networking apparatus that link network devices for communication/processing purposes. In other words, a switch is a telecommunication device that is capable of receiving a message from any device connected to it, and transmitting the message to a specific device for which the message was to be relayed. A network switch is also commonly referred to as a multi-port network bridge that processes and routes data. Here, by port, we are referring to an interface (outlet for a cable or plug) between the switch and the computer/server/CPU to which it is attached.

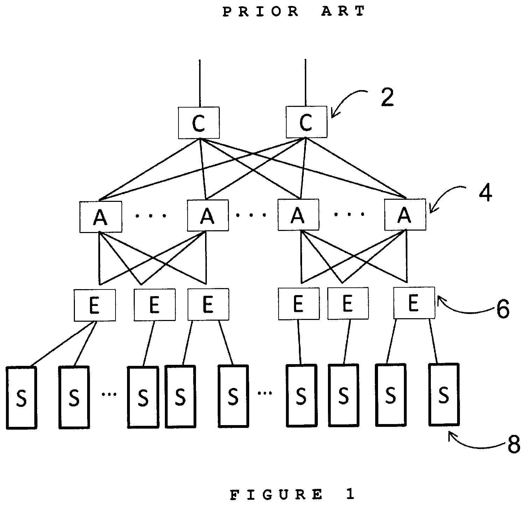

Today, DCs and CDCs generally implement data center networking using a set of layer two switches. Layer two switches process and route data at layer 2, the data link layer, which is the protocol layer that transfers data between nodes (e.g. servers) on the same local area network or adjacent nodes in a wide area network. A key problem to solve, however, is how to build a large capacity computer network that is able to carry a very large aggregate bandwidth (hundreds of TB) containing a very large number of ports (thousands), that requires minimal structure and space (i.e. minimizing the need for a large room to house numerous cabinets with racks of cards), that is easily scalable, and that may assist in minimizing power consumption. The traditional network topology implementation is based on totally independent switches organized in a hierarchical tree structure as shown in **Figure 1****.** Core switch **2** is a very high speed, low count port with a very large switching capacity. The second layer is implemented using Aggregation switch **4**, a medium capacity switch with a larger number of ports, while the third layer is implemented using lower speed, large port count (forty/forty-eight), low capacity Edge switches **6.** Typically the Edge switches are layer two, whereas the Aggregation ports are layer two and/or three, and the Core switch is typically layer three. This implementation provides any server **8** to server connectivity in a maximum of six hop links in the example provided (three hops up to the core switch **2** and three down to the destination server **8**). Such a hierarchical structure is also usually duplicated for redundancy-reliability purposes. For example, with reference to **Figure 1**, without duplication if the right-most Edge switch **6** fails, then there is no connectivity to the right-most servers **8.** In the least, core switch **2** is duplicated since the failure of the core switch **2** would generate a total data center connectivity failure. For reasons that are apparent, this method has significant limitations in addressing the challenges of the future DC or CDC. For instance, because each switch is completely self-contained, this adds complexity, significant floor-space utilization, complex cabling and manual switches configuration/provisioning that is prone to human error, and increased energy costs.

Many attempts have been made, however, to improve switching scalability, reliability, capacity and latency in data centers. For instance, efforts have been made to implement more complex switching solutions by using a unified control plane (e.g. the QFabric System switch from Juniper Networks; see, for instance, http://www.juniper.net/us/en/products-services/switching/qfabric-system/), but such a system still uses and maintains the traditional hierarchical architecture. In addition, given the exponential increase in the number of system users and data to be stored, accessed, and processed, processing power has become the most important factor when determining the performance requirements of a computer network system. While server performance has continually improved, one server is not powerful enough to meet the needs. This is why the use of parallel processing has become of paramount importance. As a result, what was predominantly north-south traffic flows, has now primarily become east-west traffic flows, in many cases up to 80%. Despite this change in traffic flows, the network architectures haven't evolved to be optimal for this model. It is therefore still the topology of the communication network (which interconnects the computing nodes (servers)) that determines the speed of interactions between CPUs during parallel processing communication.

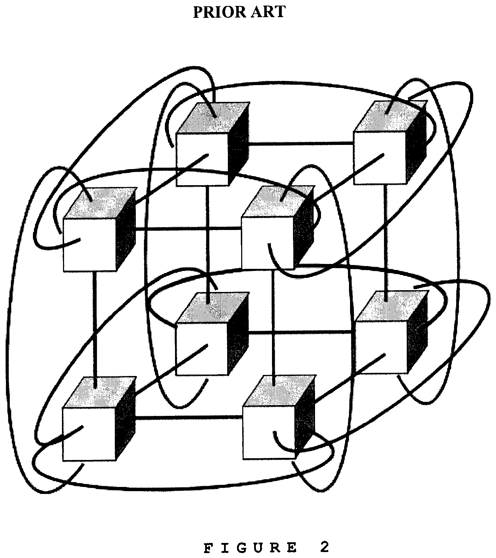

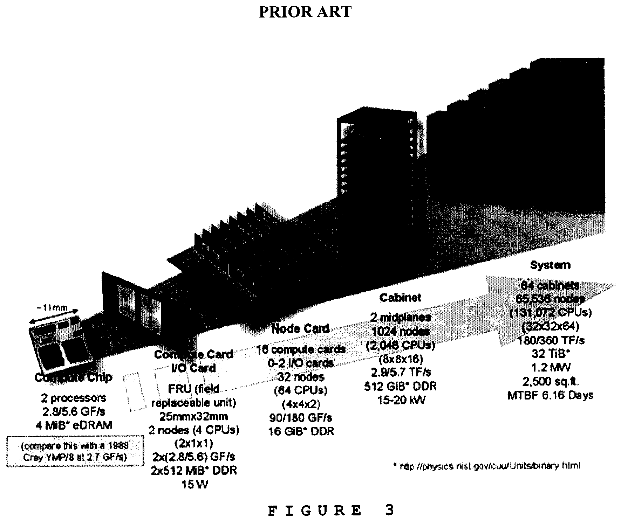

The need for increased east-west traffic communications led to the creation of newer, flatter network architectures, e.g. toroidal/torus networks. A torus interconnect system is a network topology for connecting network nodes (servers) in a mesh-like manner in parallel computer systems. A torus topology can have nodes arranged in 2, 3, or more (N) dimensions that can be visualized as an array wherein processors/servers are connected to their nearest neighbor processors/servers, and wherein processors/servers on opposite edges of the array are connected. In this way, each node has 2N connections in a N-dimensional torus configuration (**Figure 2** provides an example of a 3-D torus interconnect). Because each node in a torus topology is connected to adjacent ones via short cabling, there is low network latency during parallel processing. Indeed, a torus topology provides access to any node (server) with a minimum number of hops. For example, a four dimension torus implementing a 3 x 3 x 3 x 4 structure (108 nodes) requires on average 2.5 hops in order to provide any to any connectivity. Unfortunately, large torus network implementations have not been practical for commercial deployment in DCs or CDCs because large implementations can take years to build, cabling can be complex (2N connections for each node), and they can be costly and cumbersome to modify if expansion is necessary. However, where the need for processing power has outweighed the commercial drawbacks, the implementation of torus topologies in supercomputers has been very successful. In this respect, IBM's Blue Gene supercomputer provides an example of a 3-D torus interconnect network wherein 64 cabinets house 65,536 nodes (131,072 CPUs) to provide petaFLOPs processing power (see **Figure 3** for an illustration), while Fujitsu's PRIMEHPC FX10 supercomputer system is an example of a 6-D torus interconnect housed in 1,024 racks comprising 98,304 nodes). While the above examples dealt with a torus topology, they are equally applicable to other flat network topologies.

JP H03-196355 discloses composing a torus network of plural processor without altering the wiring of a mother board by coupling respective processor substrates mutually through dummy substrates.

The present invention seeks to overcome the deficiencies in such prior art network topologies by providing a system and architecture that is beneficial and practical for commercial deployment in DCs and CDCs.

### SUMMARY OF THE INVENTION

In one aspect, the present invention provides a method for managing the wiring and growth of a direct interconnect network implemented on a torus or higher radix interconnect structure as defined in claim 1.

In another aspect, the present invention provides a passive patch panel for use in the implementation of a torus or higher radix interconnect as defined in claim 2.

### BRIEF DESCRIPTION OF THE DRAWINGS

The embodiment of the invention will now be described, by way of example, with reference to the accompanying drawings in which:
**FIGURE 1** displays a high level view of the traditional data center network implementation (Prior art);
**FIGURE 2** displays a diagram of a 3-dimensional torus interconnect having 8 nodes (Prior Art);
**FIGURE 3** displays a diagram showing the hierarchy of the IBM Blue Gene processing units employing a torus architecture (Prior Art);
**FIGURE 4** displays a high level diagram of a 3D and 4D torus structure according to an embodiment of the present invention;
**FIGURE 5** displays a diagram for a 36 node 2-D torus according to an embodiment of the present invention as an easy to follow example of the network interconnect;
**FIGURE 6** displays a three dimensional configuration of the 2-D configuration shown in Fig. 5 replicated three times and interconnected on the third dimension;
**FIGURE 7** displays a wiring diagram of the node connectivity for the 2-D torus shown in Fig. 5;
**FIGURE 8** displays a wiring diagram of the node connectivity for the 3-D torus shown in Fig. 6;
**FIGURE 9** displays a diagram of the passive backplane of the Top of the Rack Patch Panel (TPP) that implements the wiring for the direct interconnect network of the present invention;
**FIGURE 10** displays the TPP and interconnecting plug of the present invention;
**FIGURE 11** displays the rear view of the passive backplane of the TPP with the unpowered integrated circuits used to identify the connector ID and the patch panel ID, and the PCIe card connected to the TPP;
**FIGURE 12** displays an alternative embodiment of the passive backplane of the TPP;
**FIGURE 13** displays a high level view of an optical TPP implementation of the present invention;
**FIGURE 14** displays a high level view of a data center server rack with a TPP implementation in accordance with the present invention;
**FIGURE 15** displays a high level view of a hybrid implementation of a torus toplogy with nodes implemented by Top of the Rack switches and PCIe cards housed in the server;
**FIGURE 16** displays a block diagram of a PCIe card implementation in accordance with the present invention;
**FIGURE 17** displays the packet traffic flow suported by the PCIe card shown in Figure 16;
**FIGURE 18** displays a block diagram of a PCIe card with optical multiwavelengths in accordance with the present invention;
**FIGURE 19** displays a high level view of a TPP having a passive optical multiwavelengths implementation of the present invention;
**FIGURES 20a to 20c** displays the pseudocode to generate the netlist for the wiring of a 4D torus structure;

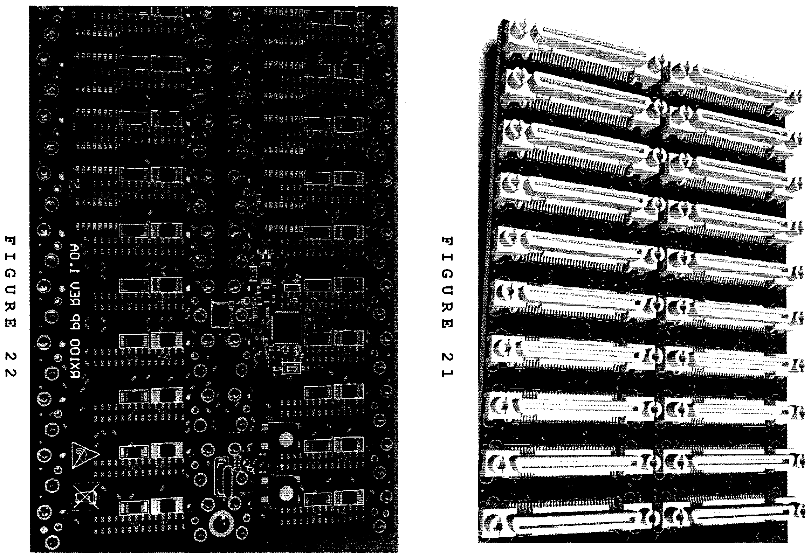

**FIGURE 21** displays the connectors installed on the TPP; and
**FIGURE 22** is the rear view of the connector board of the TPP with unpowered integrated circuits used to identify connector ID and patch panel ID.

### DETAILED DESCRIPTION OF THE INVENTION

The present invention uses a torus mesh or higher radix wiring to implement direct interconnect switching for data center applications. Such architecture is capable of providing a high performance flat layer 2/3 network to interconnect tens of thousands of servers in a single switching domain.

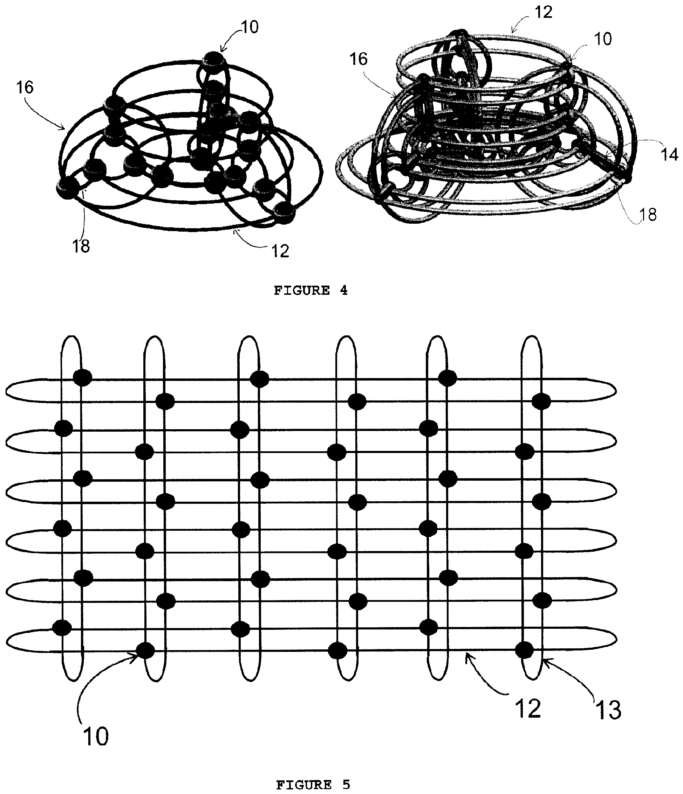

With reference to **Figure 4**, the torus used is multidimensional (i.e. 3D, 4D, etc.), in order to promote efficiency of routing packets across the structure (although even a single dimensional torus can be used in certain deployments). In this respect, there is a minimum number of hops for any to any connectivity (e.g. a four dimension torus implementing a 3 x 3 x 3 x 4 structure (108 nodes) requires on average only 2.5 hops in order to provide any to any connectivity). Each node **10** (server) can be visualized as being connected on each dimension in a ring connection (**12**, **14**, **16**, and **18**) because the nodes **10** (servers) are connected to their nearest neighbor nodes **10** (servers), as well as nodes **10** (servers) on opposite edges of the structure. Each node **10** thereby has 2N connections in the N-dimensional torus configuration. The ring connection itself can be implemented as an electrical interconnect or as an optical interconnect, or a combination of both electrical and optical interconnect.

One problem to be addressed in such a topology, however, is how to reduce deployment complexity by promoting wiring simplification and simplicity when adding new nodes in the network without impacting the existing implementation. This is one aspect of the present invention, and this disclosure addresses the wiring issues when implementing large torus or higher radix structures.

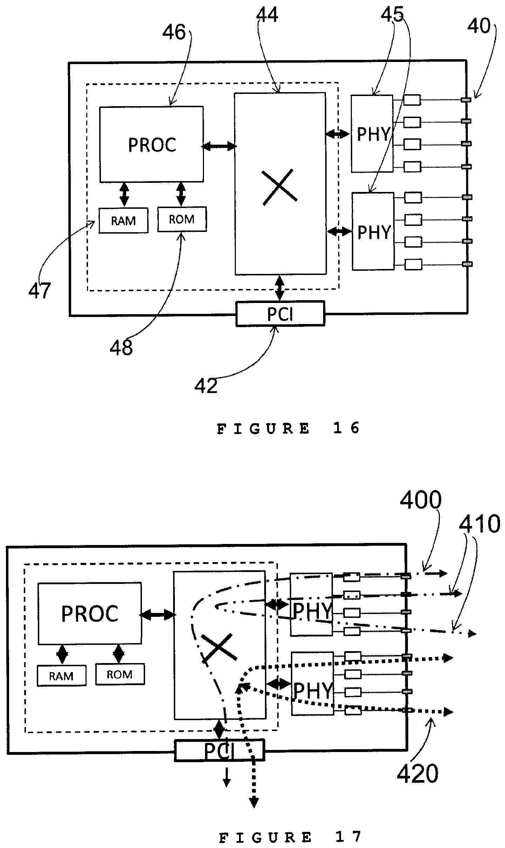

**Figure 5** displays a simple 2D torus wiring diagram for a 6 x 6 thirty-six node configuration for ease of explanation. As shown, the structure is a folded 2D torus wherein the length of each connection (**12**, **13**) is equivalent throughout. Each node **10** in this diagram represents a server interconnected via a PCIe switch card **41** (shown in **Figure 16** for instance) that is housed in the server.

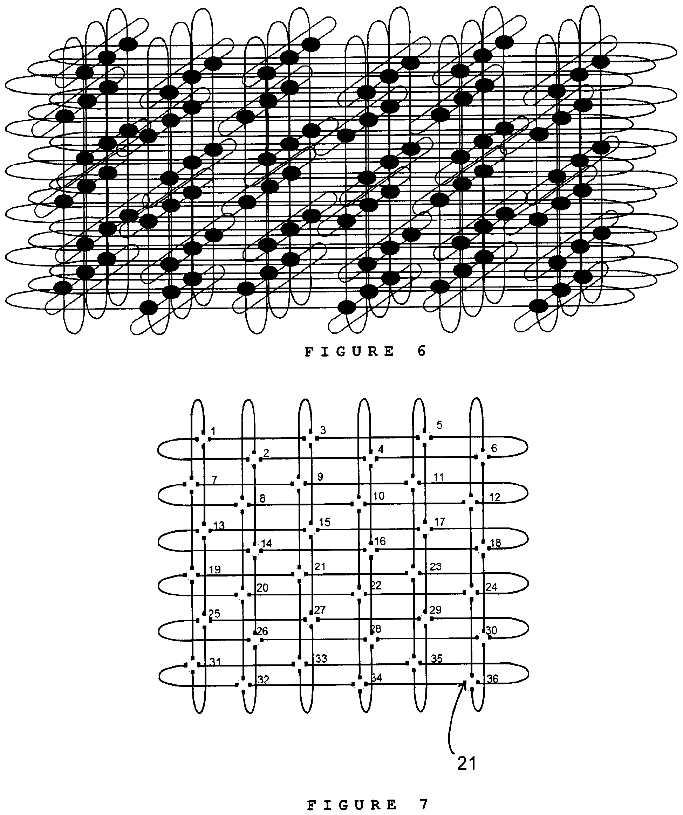

**Figure 6** displays a three dimensional configuration build using the 2D configuration of Figure 5, but replicated three times and interconnected on the third dimension.

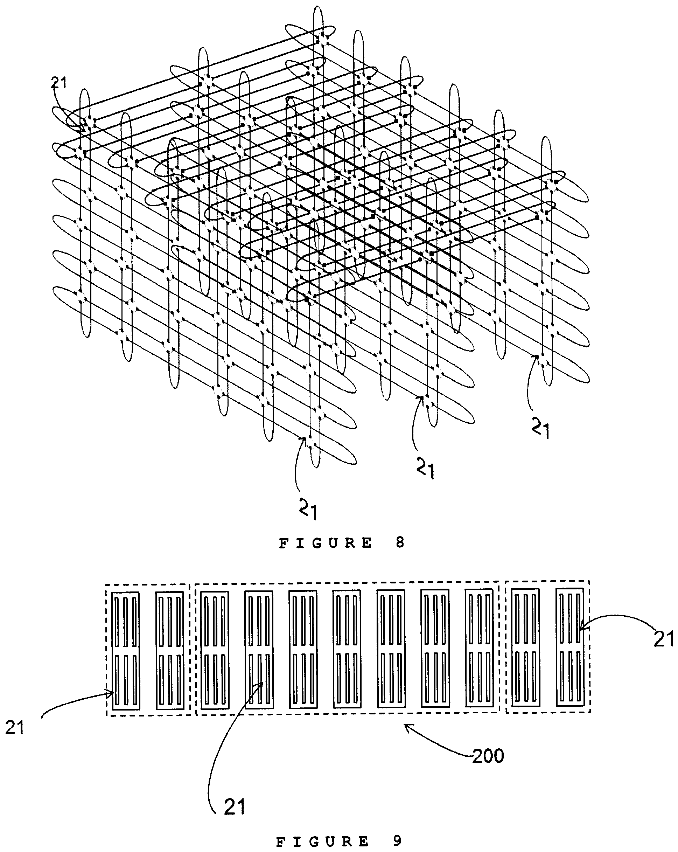

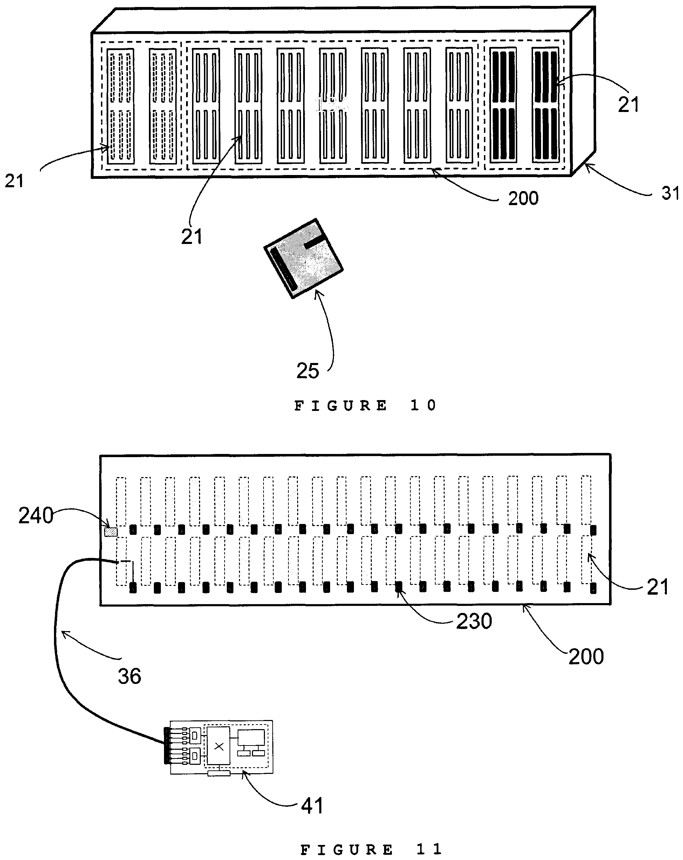

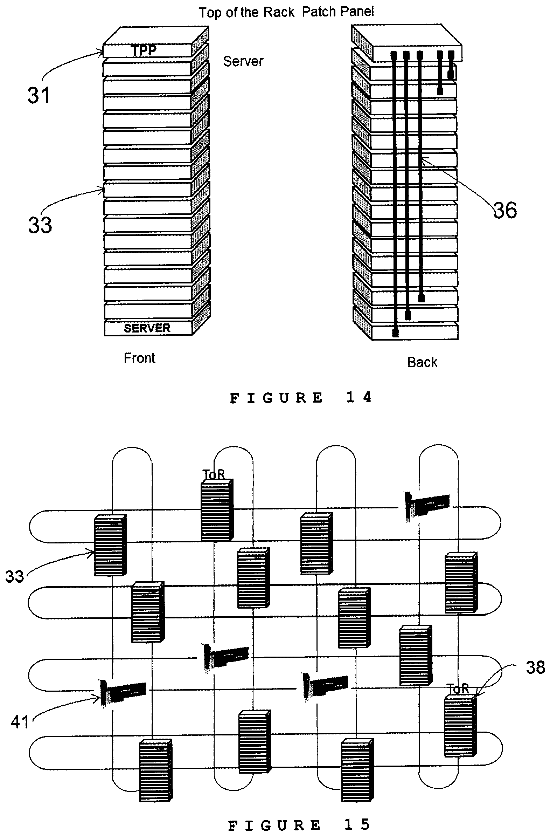

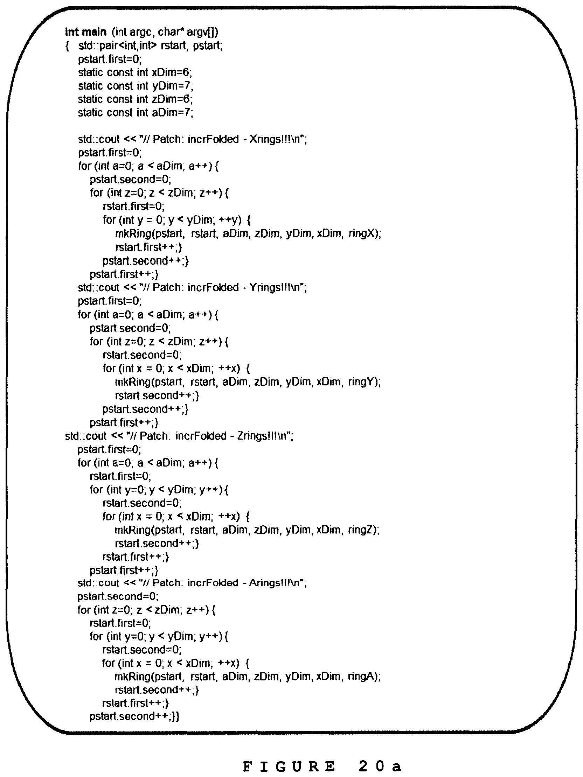

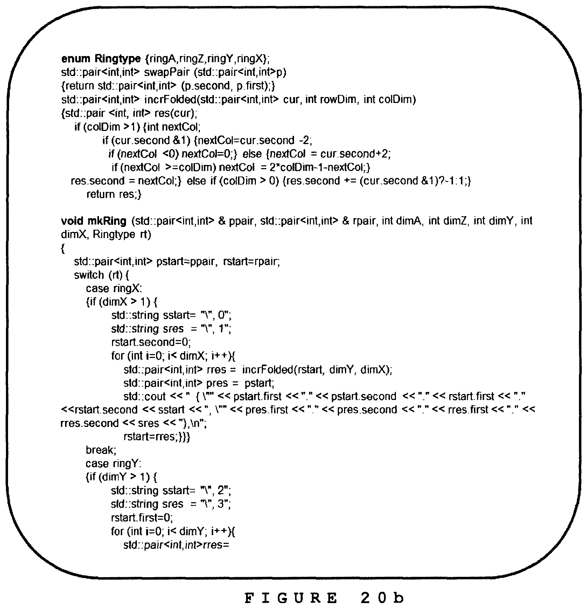

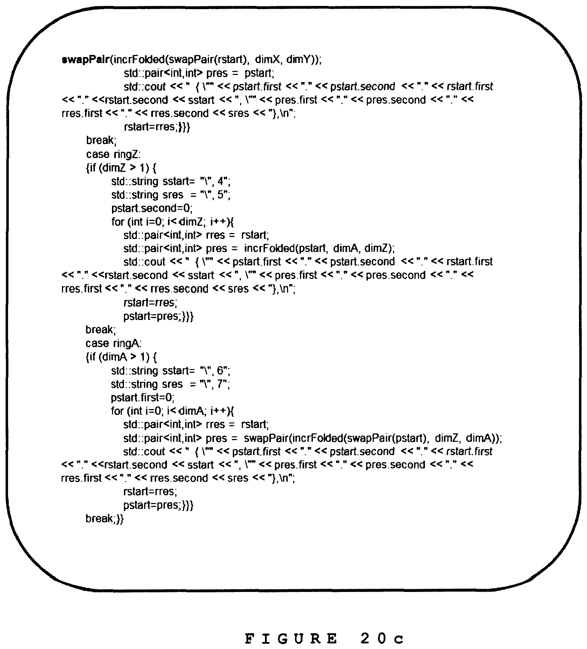

**Figure 7** displays the wiring diagram for the two dimensional torus structure shown in **Figure 5****.** In the implementation shown, each of the 36 nodes **10** has connectors **21** (which can, for instance, be a Very High Density Cable Interconnect VHDCI connector supplied by Molex or National Instruments, etc.) with four connections (north (N), south (S), east (E), west (W)) that provide the switch wiring when the cable from the PCIe card **41** (not shown) is plugged in. In order to simplify the wiring, the connectors **21** are interconnected in a passive backplane **200** (as shown in **Figure 9**) that is housed by a Top of the rack Patch Panel (TPP) **31** (as shown in **Figures 10** and **14**). The passive backplane **200** presented in **Figure 9** shows three fields: the main field (as shown in the middle of the diagram in dashed lines) populated with the 42 connectors **21** implementing a 2D 7 x 6 torus configuration, the field on the left (in dashed lines) populated with the 2 groups of 6 connectors **21** for expansion on the third dimension, and the field on the right (in dashed lines) with 2 groups of 6 connectors **21** to allow for expansion on the fourth dimension. The 3D expansion is implemented by connecting the 6 cables (same type as the cables connecting the PCIe card **41** to the TPP connector **21**) from the TPP to the TPP on a different rack **33** of servers. The TPP patch panel backplane implementation can even be modified if desired, and with a simple printed circuit board replacement (backplane **200**) a person skilled in the art can change the wiring as required to implement different torus structures (e.g. 5D, 6D, etc.). In order to provide the ability to grow the structure without any restrictions or rules to follow when adding new servers in the rack **33**, a small interconnecting plug **25** may be utilized. This plug **25** can be populated at TPP manufacture for every connector **21.** This way, every ring connection is initially closed and by replacing the plug **25** as needed with PCIe cable from the server the torus interconnect is built.
**Figure 8** presents the wiring diagram for a three dimensional torus structure. Note for instance the 6 connections shown at the nodes at the top left of the diagram to attach the PCIe cables to the 3D structure: +X, -X, +Y, -Y, +Z and -Z. The TPP implementation to accommodate the 3D torus cabling is designed to connect any connector **21** to every other connector **21** following the wiring diagram shown in **Figure 8****.**
The novel method of generating a netlist of the connectivity of the TPP is explained with the aid of pseudocode as shown at **Figures 20a** to **20c** for a 4D torus wiring implementation (that can easily be modified for a 3D, 5D, etc. implementation or otherwise). For the 3D torus (Z, Y, X) each node **10** will be at the intersection of the three rings - ringZ, ringY and ringX.
If a person skilled in the art of network architecture desires to interconnect all the servers in a rack **33** (up to 42 servers; see the middle section of **Figure 9** as discussed above) at once, there are no restrictions - the servers can be wired in random fashion. This approach greatly simplifies the deployment - you add the server, connect the cable to the TPP without any special connectivity rules, and the integrity of the torus structure is maintained. The network management system that a person skilled in the art would know how to implement will maintain a complete image of the data center network including the TPP and all the interconnected servers, which provides connectivity status and all the information required for each node.
As shown in **Figure 11**, each PCIe card **41** (housed in a node server) has connectivity by cable **36** to the TPP. The cable **36** connecting the PCIe card **41** to the TPP provides connectivity to the 8 ports **40** (see **Figure 16**) and also provides connectivity to the TPP for management purposes. The backplane **200** includes unpowered electronic devices / integrated circuit (IC) **230** attached to every connector **21.** Devices **230** are interrogated by the software running on the PCIe card **41** in order to get the connector ID where it is connected. Every device **230** attached to the connector uses a passive resistor combination that uniquely identifies every connector.
The TPP identification mechanism (patch panel ID) is also implemented using the electronic device **240** which may be programmed at installation. The local persistent memory of device **240** may also hold other information - such as manufacturing date, version, configuration and ID. The connectivity of device **240** to the PCIe cards permits the transfer of this information at software request.

At the card initialization the software applies power to the IC **230** and reads the connector **21** ID. A practical implementation requires wire connectivity - two for power and ground and the third to read the connector **21** ID using "1-Wire" technology.

In a similar fashion, the patch panel ID, programmed at installation with the management software, can be read using the same wiring as with IC **230.** The unpowered device **240** has nonvolatile memory with the ability to support read/write transactions under software control. IC **240** may hold manufacturing information, TPP version, and TPP ID.

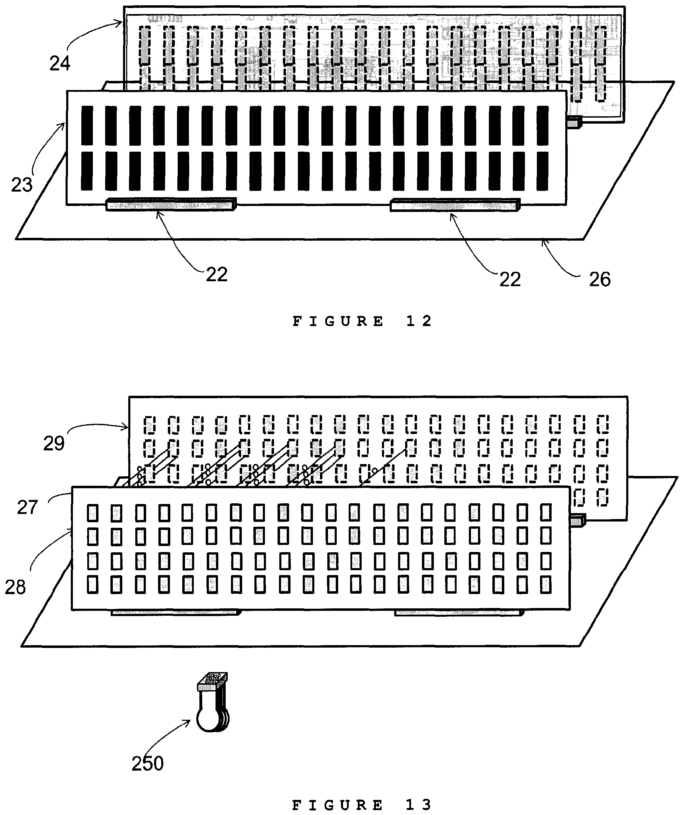

**Figure 12** displays another passive patch panel implementation option using a separate printed circuit board **26** as a backplane. This implementation can increase significantly the number of servers in the rack and also provides flexibility in connector/wiring selection.
The printed circuit board **23** supporting the connectors **21** is plugged via high capacity connectors **22** to the backplane **26.** The printed circuit board **24** also has high capacity connectors **22** and is also plugged into the backplane **26** to provide connectivity to the connector board **23.**
The high capacity connectors **21** on the board **24** can be used to interconnect the TPPs rack **33** to rack **33.**
The direct interconnect wiring is implemented on the backplane **26.** Any time the wiring changes (for different reasons) the only device to change is the backplane **26.** For example, where a very large torus implementation needs to change (e.g. for a 10,000 server configuration the most efficient 4D torus would be a 10 x 10 x 10 x 10 configuration as opposed to trying to use a 6 x 7 x 16 x 15; and for a 160,000 server deployment the most efficient configuration would be a 20 x 20 x 20 x 20), you can accommodate these configurations by simply changing the backplane **26** while maintaining the connector boards **23** and **24** the same.

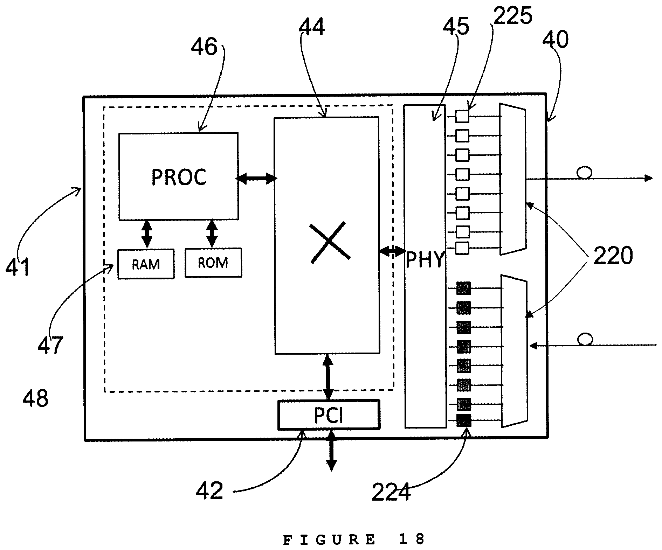

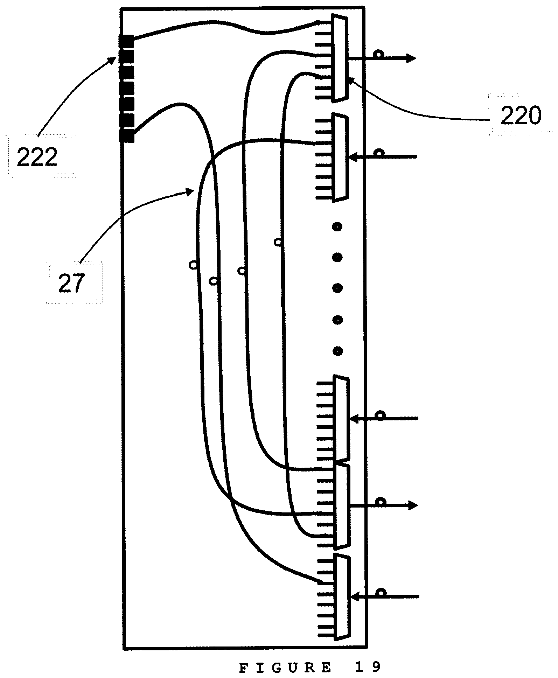

**Figure 13** displays an optical patch panel implementation. Such implementation assumes port to port fiber interconnect as per the wiring diagram presented in **Figures 5** or **6** (2D or 3D torus). The optical connectors on boards **28** and **29** are interconnected using optical fiber **27** (e.g. high density FlexPlane optical circuitry from Molex, which provides high density optical routing on PCBs or backplanes). The optical TPP is preferably fibered at manufacturing time and the optical plugs **250** should populate the TPP during manufacturing. The connectors and the optical plugs **250** are preferably low loss. The connector's optical loss is determined by the connector type (e.g. whether or not it uses micro optical lenses for collimation) and the wavelength (e.g. single mod fiber in C band introduces lower optical loss than multimode fiber at 1340 nm).
Another implementation option for the optical TPP is presented in **Figure 19**. This implementation drastically reduces the number of physical connections (fibers) using optical wavelength multiplexing. The new component added to the TPP is the passive optical mux-demux **220** that combines multiple optical wavelengths on the same fiber. The fibers **27** interconnects the outputs of the mux-demux **220** to implement the optical direct interconnect torus structure. To connect two different racks (TPP to TPP), connector **222** is used. This implementation requires a modified version of the PCIe card **41** as shown in **Figure 18****.** The card **41** includes the optical mux-demux **220**, optical transmitters **225** on different wavelengths, and optical receivers **224.**

The TPP can also be deployed as an electrical/optical hybrid implementation. In such a case, the torus nodes would have optical ports and electrical ports. A hybrid implementation would usually be used to provide connectivity to very large data centers. You could use the electrical connectivity at the rack level and optical connectivity in all rack to rack or geographical distributed data center interconnects. The electrical cables are frequently used for low rate connectivity (e.g. 1Gbps or lower rate 10/100Mbps). Special electrical cables can be used at higher rate connectivity (e.g. 10 Gbps). The higher rate interconnect network may use optical transmission, as it can offer longer reach and can support very high rates (e.g. 100 Gbps or 400 Gbps).

**Figure 15** shows a combined deployment using a Top of the Rack (ToR) switch **38** and a PCIe card **41** based server interconnect in a torus structure that is suited to implement hybrid compute servers and storage server configurations. The PCIe **41** based implementation has the advantage of increased add/drop bandwidth since the PCI port in a server can accommodate substantially more bandwidth than a fixed switch port bandwidth (e.g. 1 Gbps or 10 Gbps). The PCIe card **41** supporting the 4D torus implementation can accommodate up to 8 times the interconnect badwidth of the torus links.
The ToR switch **38** is an ordinary layer 2 Ethernet switch. The switch provides connectivity to the servers and connectivity to other ToR switches in a torus configuration where the ToR switch is a torus node. According to this embodiment of the invention the ToR switches **38** and the PCIe cards **41** are interconnected further using a modified version of the TPP **31.**

**Figure 16** displays the block diagram of the PCIe card implementation for the present invention. This card can be seen as a multiport Network Interface Card (NIC). The PCIe card **41** includes a processor **46** with RAM **47** and ROM **48** memory, a packet switch **44** and the Ethernet PHY interface devices **45.** The card **41** as shown has a PCIe connection **42** and 8 interface ports **40**, meaning the card as shown can provide for the implementation of up to a four dimension torus direct interconnect network.

**Figure 17** displays the packet traffic flows suported by the card **41.** Each port **40** has access to the PCI port **42.** Therefore, in the case of port to PCI traffic (as shown by **400**), the total bandwidth is eight times the port capacity given that the total number of ports **40** is 8. The number of ports determines the torus mesh connectivity. An eight port PCIe Card implementation enables up to a four dimension torus (x+, x-, y+, y-, z+, z- and w+, w-).
A second type of traffic suported by the card **41** is the hair pinning traffic (as shown by **410**)**.** This occurs where traffic is switched from one port to another port; the traffic is simply transiting the node. A third type of traffic supported by the card **41** is transit with add/drop traffic (as shown at **420**). This occurs when incomming traffic from one port is partially dropped to the PCI port and partially redirected to another port, or where the incoming traffic is merged with the traffic from the PCI port and redirected to another port.
The transit and add/drop traffic capability implements the direct interconnect network, whereby each node can be a traffic add/drop node.

## Claims

1. A method for managing the wiring and growth of a direct interconnect network implemented on a torus or higher radix interconnect structure, comprising the following steps:
providing a passive patch panel (31) that implements the wiring for the direct interconnect network comprising at least one connector board (200) having multiple connectors (21),
wherein said multiple connectors comprise fields of multiple connectors, namely
a main field of connectors connectable to nodes of the direct interconnect network in one or more dimensions; and
at least one secondary field of connectors connectable to at least one other passive patch panel for expansion of the direct interconnect network in one or more additional dimensions;
initially populating each of said main field and the at least one secondary field of connectors with an interconnect plug to close connections to maintain continuity of the torus or higher radix structure;
removing an interconnect plug (25, 250) from a connector (21) in the main field of connectors and replacing said plug with a connection to a node to add said node to the direct interconnect network;
removing an interconnect plug (25, 250) from a connector in the at least one secondary field of connectors and replacing said plug with a connection to the at least one other passive patch panel to expand the interconnect network in one or more additional dimensions;
and discovering connectivity of nodes added to the direct interconnect network and topology of the direct interconnect network based on the nodes added to the direct interconnect network.

2. A passive patch panel (31) for use in the implementation of a direct interconnect network implemented on a torus or higher radix interconnect structure, the passive patch panel implementing the wiring for the direct interconnect network and comprising:
at least one connector board (200) having multiple connectors (21),
wherein said multiple connectors comprise fields of multiple connectors, namely
a main field of connectors connectable to nodes of the direct interconnect network in one or more dimensions; and
at least one secondary field of connectors connectable to at least one other passive patch panel for expansion of the direct interconnect network in one or more additional dimensions;
wherein each connector in the main field of connectors is initially populated by an interconnect plug to initially close connections to maintain continuity of the torus or higher radix structure, and wherein said plug is replaced by a connection to a node to add said node to the direct interconnect network,
and wherein each connector in the at least one secondary field of connectors is initially populated by an interconnect plug to initially close connections to maintain continuity of the torus or higher radix structure, and wherein said plug is replaced by a connection to the at least one other passive patch panel to expand the interconnect network in one or more additional dimensions.

## Patentansprüche

1. Verfahren zum Verwalten der Verdrahtung und des Wachstums eines Direktverbindungsnetzwerks, das auf einer Torus- oder Higher-Radix-Verbindungsstruktur implementiert ist, umfassend die folgenden Schritte:
Vorsehen eines passiven Patchpanels (31), das die Verdrahtung für das Direktverbindungsnetzwerk implementiert, umfassend mindestens ein Anschluss-Board (200), das mehrere Anschlüsse (21) hat,
wobei die mehreren Anschlüsse Felder mehrerer Anschlüsse umfassen, nämlich
ein Hauptfeld von Anschlüssen, die mit Knoten des Direktverbindungsnetzwerks in einer oder mehr Dimensionen verbindbar sind; und
mindestens ein sekundäres Feld von Anschlüssen, die zur Erweiterung des Direktverbindungsnetzwerks in einer oder mehr zusätzlichen Dimensionen mit mindestens einem weiteren passiven Patchpanel verbindbar sind;
anfängliches Belegen eines jeden aus dem Hauptfeld und dem mindestens einen sekundären Feld von Anschlüssen mit einem Verbindungsstecker zum Schließen von Verbindungen zum Aufrechterhalten einer Kontinuität der Torus- oder Higher-Radix-Struktur;
Entfernen eines Verbindungssteckers (25, 250) von einem Anschluss (21) in dem Hauptfeld von Anschlüssen und Ersetzen des Steckers durch eine Verbindung zu einem Knoten zum Hinzufügen des Knotens zu dem Direktverbindungsnetzwerk;
Entfernen des Verbindungssteckers (25, 250) von einem Anschluss in dem mindestens einen sekundären Feld von Anschlüssen und Ersetzen des Steckers durch eine Verbindung zu dem mindestens einen weiteren passiven Patchpanel zum Erweitern des Verbindungs-Netzwerks in einer oder mehr zusätzlichen Dimensionen;
und Entdecken einer Konnektivität von zu dem Direktverbindungsnetzwerk hinzugefügten Knoten und einer Topologie des Direktverbindungsnetzwerks auf Basis der zu dem Direktverbindungsnetzwerk hinzugefügten Knoten.

2. Passives Patchpanel (31) zur Verwendung in der Implementierung eines Direktverbindungsnetzwerks, das auf einer Torus- oder Higher-Radix-Verbindungsstruktur implementiert ist, wobei das passive Patchpanel die Verdrahtung für das Direktverbindungsnetzwerk implementiert und umfasst:
mindestens ein Anschluss-Board (200), das mehrere Anschlüsse (21) hat,
wobei die mehreren Anschlüsse Felder mehrerer Anschlüsse umfassen, nämlich
ein Hauptfeld von Anschlüssen, die mit Knoten des Direktverbindungsnetzwerks in einer oder mehr Dimensionen verbindbar sind; und
mindestens ein sekundäres Feld von Anschlüssen, die zur Erweiterung des Direktverbindungsnetzwerks in einer oder mehr zusätzlichen Dimensionen mit mindestens einem weiteren passiven Patchpanel verbindbar sind;
wobei jeder Anschluss in dem Hauptfeld von Anschlüssen zum anfänglichen Schließen von Verbindungen zum Aufrechterhalten einer Kontinuität der Torus- oder Higher-Radix-Struktur anfänglich mit einem Verbindungsstecker belegt wird und wobei der Stecker durch eine Verbindung zu einem Knoten ersetzt wird, um den Knoten zu dem Direktverbindungsnetzwerk hinzuzufügen,
und wobei jeder Anschluss in dem mindestens einen sekundären Feld von Anschlüssen zum anfänglichen Schließen von Verbindungen zum Aufrechterhalten einer Kontinuität der Torus- oder Higher-Radix-Struktur anfänglich mit einem Verbindungsstecker belegt wird und wobei der Stecker durch eine Verbindung zu dem mindestens einen weiteren passiven Patchpanel ersetzt wird, um das Verbindungs-Netzwerk in einer oder mehr zusätzlichen Dimensionen zu erweitern.

## Revendications

1. Procédé de gestion du câblage et de l'extension d'un réseau d'interconnexion directe mis en œuvre sur une structure d'interconnexion torique ou à base plus élevée, comprenant les étapes consistant à :
fournir un panneau de brassage passif (31) qui met en œuvre le câblage pour le réseau d'interconnexion directe comprenant au moins une carte de connecteur (200) ayant une pluralité de connecteurs (21),
dans lequel lesdits connecteurs multiples comprennent des plages de connecteurs multiples, à savoir
une plage principale de connecteurs pouvant être connectés à des nœuds du réseau d'interconnexion directe dans une ou plusieurs dimensions ; et
au moins une plage secondaire de connecteurs pouvant être connectés à au moins un autre panneau de brassage passif pour l'extension du réseau d'interconnexion directe dans une ou plusieurs dimensions supplémentaires ;
équiper initialement chacune parmi ladite plage principale et l'au moins une plage secondaire de connecteurs avec une fiche d'interconnexion pour fermer les connexions afin de maintenir la continuité de la structure toroïdale ou à base supérieure ;
retirer une fiche d'interconnexion (25, 250) d'un connecteur (21) dans la plage principale des connecteurs et remplacer ladite fiche par une connexion à un nœud pour ajouter ledit nœud au réseau d'interconnexion directe ;
retirer une fiche d'interconnexion (25, 250) d'un connecteur dans l'au moins une plage secondaire de connecteurs et remplacer ladite fiche par une connexion à l'au moins un autre panneau de brassage passif pour étendre le réseau d'interconnexion dans une ou plusieurs dimensions supplémentaires ;
et découvrir la connectivité des nœuds ajoutés au réseau d'interconnexion directe et la topologie du réseau d'interconnexion directe sur la base des nœuds ajoutés au réseau d'interconnexion directe.

2. Un panneau de brassage passif (31) destiné à être utilisé dans la mise en œuvre d'un réseau d'interconnexion directe implémenté sur une structure d'interconnexion torique ou à base plus élevée, le panneau de brassage passif mettant en œuvre le câblage pour le réseau d'interconnexion directe et comprenant :
au moins une carte de connexion (200) ayant plusieurs connecteurs (21),
dans lequel lesdits connecteurs multiples comprennent des plages de connecteurs multiples, à savoir
une plage principale de connecteurs pouvant être connectés à des nœuds du réseau d'interconnexion directe dans une ou plusieurs dimensions ; et
au moins une plage secondaire de connecteurs pouvant être connectés à au moins un autre panneau de brassage passif pour l'extension du réseau d'interconnexion directe dans une ou plusieurs dimensions supplémentaires ;
dans lequel chaque connecteur dans la plage principale des connecteurs est initialement équipé d'une fiche d'interconnexion pour fermer initialement les connexions pour maintenir la continuité de la structure toroïdale ou à base plus élevée, et dans lequel ladite fiche est remplacée par une connexion à un nœud pour ajouter ledit nœud au réseau d'interconnexion directe,
et dans lequel chaque connecteur dans l'au moins une plage secondaire de connecteurs est équipé initialement d'une fiche d'interconnexion pour fermer initialement les connexions pour maintenir la continuité de la structure toroïdale ou à base supérieure, et dans lequel ladite fiche est remplacée par une connexion à l'au moins un autre panneau de brassage passif pour étendre le réseau d'interconnexion dans une ou plusieurs dimensions supplémentaires.
